# EUROPÄISCHE PATENTSCHRIFT

(11) **EP 4 108 971 B1**
(45) Veröffentlichungstag und Bekanntmachung des Hinweises auf die Patenterteilung: **20.11.2024**
(21) Anmeldenummer: 22177737.8
(22) Anmeldetag: 08.06.2022
(51) Int. Cl.: F16L 47/14, F16L 23/028

(54) **ROHRFLANSCH AUS KUNSTSTOFF ZUR ANBRINGUNG AN EINEM KUNSTSTOFFROHR**
PLASTIC PIPE FLANGE FOR MOUNTING ON A PLASTIC PIPE
BRIDE DE TUBE EN MATIÈRE PLASTIQUE DESTINÉ À MONTER SUR UN TUBE EN MATIÈRE PLASTIQUE

(30) Priorität: 22.06.2021 DE 202021103330 U
(43) Veröffentlichungstag der Anmeldung: 28.12.2022
(73) Patentinhaber: Simona AG, 55606 Kirn (DE)
(72) Erfinder: Wobito, Holger, 45257 Essen (DE)
(74) Vertreter: advotec.

(56) Entgegenhaltungen:
- EP-A2- 1 777 377
- WO-A2-2017/205929
- DE-B3- 102010 060 981
- DE-B3- 102018 109 555

## Beschreibung

Die Erfindung betrifft einen Rohrflansch aus Kunststoff zur Anbringung an einem Kunststoffrohr nach dem Oberbegriff des Anspruchs 1.

Die EP 1 777 377 A2 offenbart eine Flanschvorrichtung zum Zusammenfügen zweier Gehäusekomponenten einer Turbine mit einem Rastverteilungselement zur Montage eines Gasturbinenmotors.

Gattungsgemäße Rohrflansche werden insbesondere, jedoch keineswegs ausschließlich, zur Herstellung von Rohrleitungen, insbesondere Wasserrohrleitungen, verwendet. Der Rohrflansch umfasst einen Flanschring aus Kunststoff mit mehreren Ausnehmungen, die von Befestigungsschrauben durchgriffen werden können. Auf diese Weise kann der Rohrflansch an einem gegenüberliegenden Bauteil, beispielsweise einer Armatur oder einem zweiten Rohrende, befestigt werden. Ein derartiger Rohrflansch ist beispielsweise in der DE 10 2010 060 981 B3 beschrieben. Gattungsgemäße Rohrflansche zeichnen sich dadurch aus, dass sie aus einem schweißbaren Kunststoff hergestellt sind, wobei am Innenumfang des Flanschrings ein Schweißbund einstückig angeformt ist. Auf diese Weise kann der Rohrflansch durch entsprechende Schweißverfahren am Ende eines Kunststoffrohrs angeschweißt werden. Um beim Verschrauben des Rohrflansches den erforderlichen Andruck in der Flanschverbindung aufbringen zu können, umfasst der Rohrflansch zusätzlich eine ringförmige Unterlegscheibe, die am Außenumfang des Schweißbunds angeordnet ist. Diese Unterlegscheibe weist ihrerseits mehrere kongruent zu den Ausnehmungen im Flanschring angeordnete Ausnehmungen auf, so dass die durch die Ausnehmungen des Flanschrings durchgesteckten Befestigungsschrauben auch durch die Ausnehmungen in der Unterlegscheibe durchgesteckt werden können. Aufgrund der Anbringung des Rohrflansches mittels einer Schweißverbindung ist es bei gattungsgemäßen Rohrflanschen nicht vordefiniert, in welcher Lage die einzelnen Ausnehmungen relativ zum Rohr angeordnet sind. Sind nun am Kunststoffrohr die für die korrekte Befestigung des Flanschrings erforderlichen Markierungen, die die Reihenfolge beim Anziehen der Befestigungsschrauben definieren, angebracht, so kann es durch ein Verdrehen des Rohrflansches relativ zum Kunststoffrohr zu Montagefehlern kommen. Ausgehend davon ist es Aufgabe der vorliegenden Erfindung, einen Rohrflansch vorzuschlagen, der die oben beschriebenen Nachteile vermeidet.

Diese Aufgabe wird durch einen Rohrflansch nach der Lehre des Anspruchs 1 gelöst.

Vorteilhafte Ausführungsformen der Erfindung sind Gegenstand der Unteransprüche.

Der erfindungsgemäße Rohrflansch zeichnet sich dadurch aus, dass am Flanschring und/oder an der Unterlegscheibe jeweils mehrere Markierungen angebracht sind, die jeweils einer Ausnehmung im Flanschring bzw. in der Unterlegscheibe zugeordnet sind. Die Markierungen können dabei entweder an der Stirnseite und/oder am Außenumfang des Flanschrings bzw. der ringförmigen Unterlegscheibe angebracht sein. Die verschiedenen Markierungen definieren die Reihenfolge beim Anziehen der Befestigungsschrauben, wie sie zur Befestigung des Flanschrings an einem gegenüberliegenden Bauteil erforderlich ist. Da die Markierungen integraler Bestandteil des Rohrflansches sind, kann durch einen Winkelversatz zwischen dem Kunststoffrohr und dem Rohrflansch kein Montagefehler bei der Befestigung des Rohrflansches auftreten.

Zusätzlich zur Anbringung der Markierungen, die die Reihenfolge beim Anziehen der Befestigungsschrauben definieren, ist am Flanschring oder an der Unterlegscheibe eine Zusatzmarkierung angebracht, die als Zugang zu einem Datenbankeintrag verwendet wird.

Insbesondere ist diese Zusatzmarkierung in der Art eines digitalen Codes, insbesondere QR-Codes, ausgebildet. Durch Abfotografieren und Ansteuern dieses digitalen Codes (insbesondere QR-Codes) hat der Verwender dann die Möglichkeit, einen Datenbankeintrag bei einer geeigneten Internetverbindung auszulesen, der zusätzliche Informationen zur Montage des Flanschrings enthält.

Welche Art von Markierungen zur Definition der Reihenfolge beim Anziehen der Befestigungsschrauben benutzt werden, ist grundsätzlich beliebig. Als besonders einfach hat sich die Markierung mit einer numerischen Ziffer oder Ziffernfolge im Bereich von 1 bis 99 erwiesen.

Aus welchem Material der Rohrflansch hergestellt ist, ist grundsätzlich beliebig, soweit der dazu verwendete Kunststoff ein Schweißen des Schweißbunds an einem gegenüberliegenden Kunststoffrohr ermöglicht. Somit kann der Rohrflansch im Grundsatz insbesondere aus allen Standard-Thermoplasten verstärkt und unterverstärkt hergestellt werden. Als besonders geeignet dafür hat sich Polypropylen oder Polyethylen erwiesen.

Die Unterlegscheibe kann bevorzugt aus Metall, insbesondere Stahl, hergestellt sein.

Um eine Korrosion der Unterlegscheibe bei Verlegung des Rohrflansches im Untergrund zu verhindern, ist es besonders vorteilhaft, wenn die Oberfläche der Unterlegscheibe mit einer Korrosionsschutzschicht beschichtet ist.

Insbesondere kann die Oberfläche der Unterlegscheibe mit einer Galvanisierungsschicht oder einer Epoxidschicht oder einer Polypropylenschicht, beschichtet werden, um eine unerwünschte Korrosion der Unterlegscheibe zu verhindern.

Alternativ kann zur Herstellung der Unterlegscheibe auch Polypropylen, Polyethylen oder Polyamid, insbesondere auch faserverstärktes Polypropylen, Polyethylen oder Polyamid, verwendet werden.

Eine Ausführungsform der Erfindung ist in den Zeichnungen schematisiert dargestellt und wird nachfolgend beispielhaft erläutert.

Es zeigen:
- **Fig. 1**: einen erfindungsgemäßen Rohrflansch in seitlicher Ansicht;
- **Fig. 2**: den Rohrflansch gemäß Fig. 1 in Ansicht von oben;
- **Fig. 3**: den Rohrflansch gemäß Fig. 2 im Querschnitt entlang der Schnittlinie A-A.

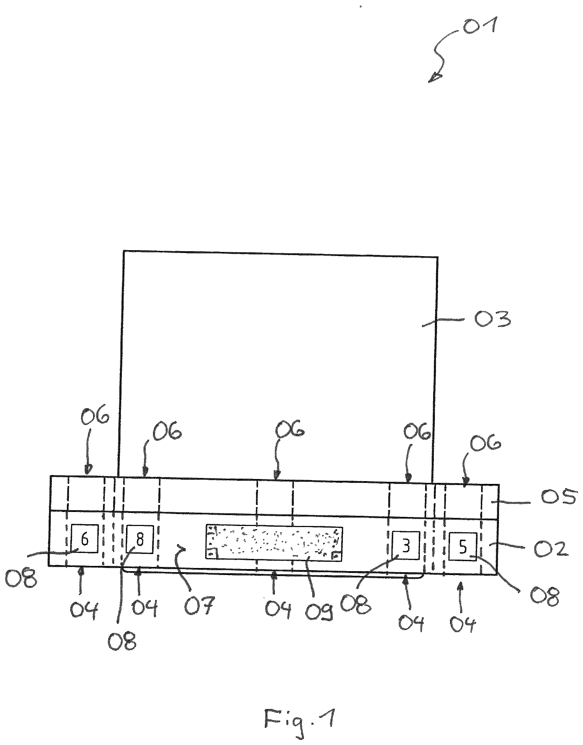

**Fig. 1** zeigt einen aus Kunststoff, nämlich aus glasfaserverstärktem Polypropylen, hergestellten Rohrflansch 01 in seitlicher Ansicht. Der Rohrflansch 01 umfasst einen am Flanschring 02 einstückig angeformten Schweißbund 03. Mittels des Schweißbunds 03 kann der Rohrflansch 01 am Ende eines stumpf abgeschnittenen Kunststoffrohrs durch Verwendung eines geeigneten Schweißverfahrens druckfest angeschweißt werden.

Im Flanschring 02 sind insgesamt acht Ausnehmungen 04 vorgesehen, durch die bei der Montage des Rohrflansches 01 geeignete Befestigungsschrauben durchgesteckt werden können. Am Außenumfang des Schweißbunds 03 ist eine ringförmige Unterlegscheibe 05 angeordnet.

Die Unterlegscheibe 05 ist aus Stahl hergestellt und mit einer Korrosionsschutzbeschichtung, beispielsweise einer Galvanisierung, ausgestattet. Die Unterlegscheibe 05 weist ebenfalls acht zu den Ausnehmungen 04 im Flanschring 02 kongruent angeordnete Ausnehmungen 06 auf, die bei der Montage des Rohrflansches 01 ebenfalls von den entsprechend vorgesehenen Befestigungsschrauben durchgriffen werden.

Am Außenumfang 07 des Flanschrings 02 sind acht Markierungen 08, beispielsweise geeignete Aufkleber, angebracht, auf welchen jeweils eine numerische Ziffer dargestellt ist und wobei jeweils eine Ziffer einer der Ausnehmungen 04 bzw. 06 zugeordnet ist. Die Markierungen 08 definieren die Reihenfolge beim Anziehen der Befestigungsschrauben, die die Ausnehmungen 04 bzw. 06 durchgreifen. Durch Einhalten dieser Reihenfolge wird eine gleichmäßige Druckverteilung in der Stirnseite des Flanschrings 02 nach dem Anziehen der Befestigungsschrauben erreicht und eine Verspannung des Flanschrings 02 bzw. der Unterlegscheibe 05 vermieden.

Zusätzlich zu den acht Markierungen 08 ist am Außenumfang 07 des Flanschrings 02 auch noch eine Zusatzmarkierung 09 angebracht, die beispielsweise in der Art eines digitalen Codes, nämliche eines QR-Codes, ausgestaltet sein kann. Durch Abfotografieren und Auswerten des QR-Codes kann eine Internetverbindung zu einer Datenbank aufgebaut werden, die weitere Informationen zur Beschreibung der Montagevorschriften beim Montieren des Rohrflansches 02 enthält.

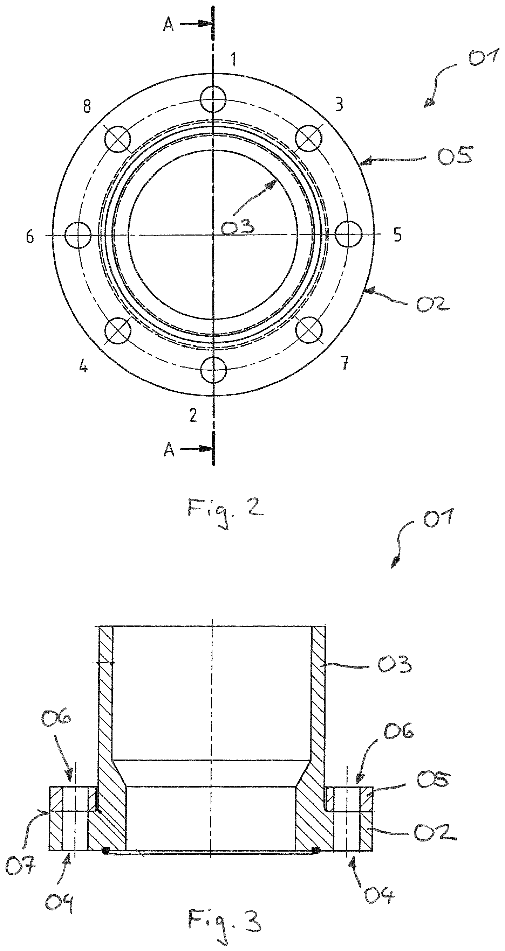

**Fig. 2** zeigt den Rohrflansch 01 mit dem Flanschring 02 und der Unterlegscheibe 05 und dem Schweißbund 03 in Ansicht von oben. Man erkennt die acht Ausnehmungen 04 im Flanschring 02. Die neben den Ausnehmungen 04 gezeigten Ziffern 1, 2, 3, 4, 5, 6, 7 und 8 markieren jeweils die Reihenfolge beim Anziehen der Befestigungsschrauben zur Fixierung des Rohrflansches 01 an einem gegenüberliegenden Bauteil.

**Fig. 3** zeigt den Rohrflansch 01 im Querschnitt entlang der Schnittlinie A-A. Der Schweißbund 03 ist einstückig an dem aus Kunststoff hergestellten Flanschring 02 angeformt. Die Unterlegscheibe 05 hintergreift den Flanschring 02 und sorgt für eine gleichmäßige Druckverteilung nach Anziehen der Befestigungsschrauben, die die Ausnehmungen 06 bzw. 04 durchgreifen.

## Patentansprüche

1. Rohrflansch (01) aus Kunststoff zur Anbringung an einem Kunststoffrohr mit einem Flanschring (02) aus Kunststoff, wobei der Flanschring (02) mehrere Ausnehmungen (04) aufweist, die von Befestigungsschrauben durchgriffen werden können, und wobei am Flanschring (02) ein Schweißbund (03) einstückig angeformt ist, der am Ende eines Kunststoffrohrs angeschweißt werden kann, und wobei am Außenumfang des Schweißbunds (03) eine ringförmige Unterlegscheibe (05) angeordnet ist, wobei die Unterlegscheibe (05) mehrere kongruent zu den Ausnehmungen (04) im Flanschring (02) angeordnete Ausnehmungen (06) aufweist, die von Befestigungsschrauben durchgriffen werden können,
**dadurch gekennzeichnet,**
**dass** an der Stirnseite und/oder am Außenumfang (07) des Flanschrings (02) und/oder dass an der Stirnseite und/oder am Außenumfang der ringförmigen Unterlegscheibe mehrere Markierungen (08) angebracht sind, die jeweils einer Ausnehmung (04, 06) im Flanschring (02) oder in der ringförmigen Unterlegscheibe (05) zugeordnet sind, wobei die Markierungen (08) die Reihenfolge beim Anziehen der Befestigungsschrauben in den Ausnehmungen (04, 06) definieren, und wobei am Flanschring (02) und/oder an der Unterlegscheibe (05) eine Zusatzmarkierung (09) in der Art eines digitalen Codes angebracht ist, und wobei die Zusatzmarkierung als Zugang zu einem zumindest zusätzliche Montageinformationen enthaltenden Datenbankeintrag verwendbar ist.

2. Rohrflansch nach Anspruch 1,
**dadurch gekennzeichnet,**
**dass** die Markierungen (08) jeweils eine numerische Ziffer oder Ziffernfolge im Bereich von 1 bis 99 anzeigen.

3. Rohrflansch nach Anspruch 1 oder 2,
**dadurch gekennzeichnet,**
**dass** die Zusatzmarkierung (09) ein QR-Code ist.

4. Rohrflansch nach einem der Ansprüche 1 bis 3,
**dadurch gekennzeichnet,**
**dass** der Rohrflansch (01) aus Polypropylen hergestellt ist.

5. Rohrflansch nach Anspruch 1 bis 3,
**dadurch gekennzeichnet,**
**dass** der Rohrflansch (01) aus Polyethylen hergestellt ist.

6. Rohrflansch nach einem der Ansprüche 1 bis 5,
**dadurch gekennzeichnet,**
**dass** die Unterlegscheibe (05) aus Metall, insbesondere Stahl, hergestellt ist.

7. Rohrflansch nach Anspruch 6,
**dadurch gekennzeichnet,**
**dass** die Oberfläche der Unterlegscheibe (05) mit einer Korrosionsschutzschicht beschichtet ist.

8. Rohrflansch nach Anspruch 7,
**dadurch gekennzeichnet,**
**dass** die Oberfläche der Unterlegscheibe (05) mit einer Galvanisierungsschicht oder einer Epoxidschicht oder einer Polypropylenschicht beschichtet ist.

9. Rohrflansch nach einem der Ansprüche 1 bis 8,
**dadurch gekennzeichnet,**
**dass** die Unterlegscheibe (05) aus Polypropylen, Polyethylen oder Polyamid, insbesondere aus faserverstärktem Polypropylen, Polyethylen oder Polyamid, hergestellt ist.

## Claims

1. A plastic pipe flange (01) for being mounted on a plastic pipe and having a plastic flange ring (02), the flange ring (02) having several recesses (04) through which fastening screws are inserted, and a weld collar (03) being integrally formed on the flange ring (02) and being welded to one end of a plastic pipe, and an annular washer (05) being disposed around the outer circumference of the weld collar (03), the washer (05) having several recesses (06) which are disposed congruently to the recesses (04) in the flange ring (02) and through which fastening screws are inserted, **characterized in that**
several markings (08) are applied on the front side and/or on the outer circumference (07) of the flange ring (02) and/or several markings (08) are applied on the front side and/or on the outer circumference of the annular washer, the markings (08) each being assigned to a recess (04, 06) in the flange ring (02) or in the annular washer (05), the markings (08) defining the sequence for tightening the fastening screws in the recesses (04, 06), and an additional marking (09) in the form of a digital code being applied on the flange ring (02) and/or on the washer (05), and the additional marking being usable to access a databank entry containing additional mounting information.

2. The pipe flange according to claim 1,
**characterized in that**
the markings (08) each indicate a numeric digit or digit sequence in the range from 1 to 99.

3. The pipe flange according to claim 1 or 2,
**characterized in that**
the additional marking (09) is a QR code.

4. The pipe flange according to any one of the claims 1 to 3, **characterized in that**
the pipe flange (01) is made of polypropylene.

5. The pipe flange according to any one of the claims 1 to 3, **characterized in that**
the pipe flange (01) is made of polyethylene.

6. The pipe flange according to any one of the claims 1 to 5, **characterized in that**
the washer (05) is made of metal, in particular steel.

7. The pipe flange according to claim 6,
**characterized in that**
the surface of the washer (05) is coated with an anti-corrosion layer.

8. The pipe flange according to claim 7,
**characterized in that**
the surface of the washer (05) is coated with a galvanizing layer or an epoxy layer or a polypropylene layer.

9. The pipe flange according to any one of the claims 1 to 8, **characterized in that**
the washer (05) is made of polypropylene, polyethylene or polyamide, in particular of fiber-reinforced polypropylene, polyethylene or polyamide.

## Revendications

1. Bride de tuyau (01) en plastique destinée à être montée sur un tuyau en plastique et comprenant un anneau de bride (02) en plastique, l'anneau de bride (02) comprenant plusieurs évidements (04) à travers lesquels des vis de fixation sont insérées, et un collier de soudure (03) étant formé intégralement sur l'anneau de bride (02) et étant soudé à une extrémité d'un tuyau en plastique, et une rondelle (05) annulaire étant disposée autour de la circonférence extérieure du collier de soudure (03), la rondelle (05) ayant plusieurs évidements (06) qui sont disposés de façon congruente par rapport aux évidements (04) dans l'anneau de la bride (02) et à travers lesquels des vis de fixation sont insérées, **caractérisé en ce que**
plusieurs marquages (08) sont appliqués sur la face avant et/ou sur la circonférence extérieure (07) de l'anneau de bride et/ou plusieurs marquages (08) sont appliqués sur la face avant et/ou sur la circonférence extérieure de la rondelle annulaire, les marquages (08) étant chacun assignés à un évidement (04, 06) dans l'anneau de bride (02) ou dans la rondelle (05) annulaire, les marquages (08) définissant la séquence de serrage des vis de fixation dans les évidements (04, 06), et un marquage supplémentaire (09) sous forme de code numérique étant appliqué sur l'anneau de bride (02) et/ou sur la rondelle (05), et le marquage supplémentaire étant utilisable pour accéder à une entrée dans une banque de données contenant des informations supplémentaires sur le montage.

2. Bride de tuyau selon la revendication 1,
**caractérisée en ce que**
les marquages (08) indiquent chacun un chiffre numérique ou une séquence de chiffres dans la plage de 1 à 99.

3. Bride de tuyau selon la revendication 1 ou la revendication 2, **caractérisée en ce que**
le marquage supplémentaire (09) est un code QR.

4. Bride de tuyau selon l'une des revendications 1 à 3, **caractérisée en ce que**
la bride de tuyau (01) est en polypropylène.

5. Bride de tuyau selon l'une des revendications 1 à 3, **caractérisée en ce que**
la bride de tuyau (01) est en polyéthylène.

6. Bride de tuyau selon l'une quelconque des revendications 1 à 5, **caractérisée en ce que**
la rondelle (05) est en métal, notamment en acier.

7. Bride de tuyau selon la revendication 6,
**caractérisée en ce que**
la surface de la rondelle (05) est recouverte d'une couche anticorrosion.

8. Bride de tuyau selon la revendication 7,
**caractérisée en ce que**
la surface de la rondelle (05) est recouverte d'une couche de galvanisation ou d'une couche d'époxy ou d'une couche de polypropylène.

9. Bride de tuyau selon l'une quelconque des revendications 1 à 8, **caractérisée en ce que**
la rondelle (05) est en polypropylène, en polyéthylène ou en polyamide, notamment en polypropylène, en polyéthylène ou en polyamide renforcés de fibres.
